# EUROPEAN PATENT SPECIFICATION

(11) **EP 2 412 773 B1**
(45) Date of publication and mention of the grant of the patent: **29.06.2016**
(21) Application number: 10755933.8
(22) Date of filing: 17.03.2010
(51) Int. Cl.: C09J 7/02, B32B 27/00, C09D 175/08, C09D 175/16, C09J 201/00, G09F 9/00, C09D 4/00, C08J 7/04, C08F 290/06, C08F 283/00, C08F 299/00, C08G 18/81, C08G 18/18, C08G 18/38, C09D 5/00, C08F 299/06, C09D 133/00, C09D 163/10

(54) **ADHESIVE PROTECTIVE FILM, SCREEN PANEL, AND PORTABLE ELECTRONIC TERMINAL**
SCHÜTZENDE HAFTFOLIE, BILDSCHIRMTAFEL UND TRAGBARES ELEKTRONISCHES ENDGERÄT
FILM PROTECTEUR ADHÉSIF, PANNEAU-ÉCRAN ET TERMINAL ÉLECTRONIQUE PORTABLE

(30) Priority: 23.03.2009 JP 2009069850
(43) Date of publication of application: 01.02.2012
(73) Proprietor: DIC Corporation, Tokyo 174-8520 (JP)
(72) Inventor: TAKAHASHI Yusuke, Kitaadachi-gun Saitama 362-8577 (JP); NAKAMURA Ryuichi, Kitaadachi-gun Saitama 362-8577 (JP); TANABE Kosuke, Kitaadachi-gun Saitama 362-8577 (JP)
(74) Representative: Beckmann, Claus
(86) International application number: PCT/JP2010/054500
(87) International publication number: WO 2010/110135

(56) References cited:
- WO-A1-2006/082776
- WO-A1-2008/108358
- JP-A- 2003 096 146
- JP-A- 2003 240 951
- JP-A- 2004 117 790
- JP-A- 2006 328 364
- JP-A- 2007 131 837
- JP-A- 2008 063 518
- JP-A- 2008 063 518
- JP-A- 2008 095 064
- JP-A- 2008 231 358
- US-A1- 2006 216 500

## Description

### TECHNICAL FIELD

The present invention relates to an adhesive protective film which protects a screen panel provided on the surface of a display apparatus such as a liquid crystal panel or an EL display, a screen panel having the adhesive protective film, and a portable electronic terminal having the screen panel.

### BACKGROUND ART

The miniaturization and slimming of small-sized electronic terminals such as mobile personal computers, personal digital assistants and mobile telephones are still in progress, and with regard to the image display apparatuses such as liquid crystal display apparatuses used in these electronic terminals, even further reduction of weight and size has been demanded in recent years. Furthermore, many of these small-sized electronic terminals are provided with a screen panel for protective purposes in order to prevent scratches or damage to the image display apparatuses. Particularly, along with an increase in the small-sized electronic terminals capable of pen/touch input, there is an increasing demand for the prevention of scratches or damage.

As the screen panel, panels made of resins such as acrylic resins or polycarbonate have been traditionally used. However, since panels made of resins have insufficient rigidity, there occurs a problem in that when the panel area is pressed with a finger, the display apparatus is deformed thus causing display failure, or the screen panel partly adheres to the image display panel under a high temperature and high humidity environment.

To cope with such a problem, for example, panels made of glass plates are increasingly employed as high rigidity screen panels. However, in the case of using a glass panel in small-sized electronic terminals, for which there is a high demand for slimming, breakage may occur due to the slimming of the panel, and therefore, attachment of an adhesive protective film having a scattering preventing function to the surface of the panel is under investigation.

As such an adhesive protective film, a film having a hard coat layer is being used for the prevention of scratches or damage to the surface, and for example, an adhesive protective film which realizes high surface hardness due to the specific layer configuration of the film, has been disclosed (see Patent Document 1). Due to the specific layer configuration, this adhesive protective film exhibits less reduction in the surface hardness which is caused by the adhesive layer, even if the screen panel is of a thin type, and therefore, a screen panel which does not easily become scratched despite being a thin type, can be realized.

The adhesive protective film has a high surface hardness, but if the surface hardness is increased, cracks may easily occur at the hard coat area, so that there have been instances where breakage or damage occurs at the time of punching processing. Furthermore, even in the case of such a screen panel which does not easily become scratched, deterioration over time of the protective film due to the use for a very long time, the occurrence of scratches or haze in the protective film due to the application of excessive pressure, or the occurrence of damage to the screen panel or the image display apparatus due to dropping cannot be avoided, and when such deterioration or damage occurs, repair is required. At the time of use, if the protective film is easily detachable, the visibility of the image display area is deteriorated, and therefore, the protective film needs to have adhesiveness to an extent that peeling does not occur at the time of use. However, when such repair is implemented, there occurs a need to separate the various parts in order to exchange the damaged part, and it is desirable that the protective film be suitably peelable. However, sufficient investigation has not been completed on the peeling performance of the adhesive protective film.

[Patent Document 1] Japanese Unexamined Patent Application, First Publication No. No. 2008-095064

### DISCLOSURE OF INVENTION

### PROBLEMS TO BE SOLVED BY THE INVENTION

An object of the invention is to provide an adhesive protective film in which, even in the case where a panel having a small thickness is formed by laminating a glass plate with the adhesive protective film via an adhesive layer, scratching does not easily occur, cracks are not easily generated in the hard coat layer at the time of processing, and which has both suitable adhesiveness and peelability.

### MEANS FOR SOLVING THE PROBLEMS

In the adhesive protective film of the invention, even when the adhesive protective film is in a state where an adhesive protective film produced by providing an adhesive layer having an adhesive force in a specific range on a hard coat film having a hard coat layer surface with a specific Martens hardness is bonded to an object of bonding via the adhesive layer, when pressure is topically applied on the surface of the adhesive protective film by an impact the adhesive protective film appropriately mitigates depressions of the film which are attributable to the presence of the adhesive layer even if the adhesive protective film has a small thickness, and thereby the adhesive protective film can satisfactorily exhibit the characteristics of the hard coat film in the case where the adhesive layer is absent. Furthermore, when a hard coat film having a specific Martens hardness is combined with an adhesive layer having a specific adhesive force, the cracks in the hard coat layer does not easily occur when the adhesive protective film is peeled, and an increase in the peeling force due to the fracture stress of the cracks can be reduced, so that the adhesive protective film can be suitably peeled at the time of peeling.

That is, the invention provides an adhesive protective film which includes a hard coat film having a film substrate and a hard coat layer provided on at least one side of surface layers of the film substrate and an adhesive layer provided on the hard coat film, wherein the hard coat film is a hard coat film having a Martens hardness of 240 to 300 N/mm², as measured by pressing a Vickers indenter having an apex angle of 136° against the surface of the hard coat layer under a load of 15 mN, and the adhesive layer is an adhesive layer having a 180° peel adhesive force of 4 to 15 N/25 mm, as obtained when an adhesive tape formed by providing an adhesive layer having a thickness of 10 µm on a PET base having a thickness of 100 µm, is pressure-bonded to a glass plate under an environment of a temperature of 23°C and a relative humidity of 50% RH, by performing pressure bonding using a 2-kg roller in one round trip, is left to stand for 240 hours under an environment of 60°C and 90% humidity, and is peeled at a peeling rate of 300 mm/min.

### EFFECT OF THE INVENTION

The adhesive protective film of the invention having the configuration described above does not easily become scratched on the surface, does not easily become cracked in the hard coat layer during processing, and has suitable adhesiveness and peelability. For this reason, a screen panel and a small-sized electronic terminal, which are capable of suitably maintaining the visibility of the image display unit against scratches or peeling during the time of use, and are capable being easily separated into parts at the time of repair or recycling, can be realized.

### BEST MODE FOR CARRYING OUT THE INVENTION

### [Film substrate]

The film substrate used in the invention may be a film substrate such that the hard coat film has a Martens hardness of 240 to 300 N/mm² at the surface of the hard coat layer.

Examples of such a film substrate include polyethylene terephthalate, polybutylene terephthalate, polyethylene naphthalate, a polyethylene film, a polypropylene film, cellophane, a diacetyl cellulose film, a triacetyl cellulose film, an acetyl cellulose butyratc film, a polyvinyl chloride film, a polyvinylidene chloride film, a polyvinyl alcohol film, an ethylene-vinyl acetate copolymer film, a polystyrene film, a polycarbonate film, a polymethylpentene film, a polysulfone film, a polyether ether ketone film, a polyether sulfone film, a polyether imide film, a polyimide film, a fluororesin film, a nylon film, and an acrylic resin film.

It is preferable for the adhesive protective film that protects the surface of a display or the like to at least adjust the thickness to 150 µm or less, from the viewpoint of the external appearance or from the viewpoint of peeling in relation to the film edge portion. For this reason, it is necessary that the substrate film be a thin substrate, and also from the viewpoint that lamination with other layers is needed, it is necessary to at least adjust the thickness to 100 µm or less.

On the surface of the film substrate used in the invention, a thin primer layer may be provided to the extent that the total thickness does not exceed 150 µm, in order to enhance the adhesiveness to the hard coat layer. Furthermore, for the purpose of enhancing the adhesiveness to the hard coat layer or the adhesive layer, surface treatments such as a surface roughening treatment through a sand blast method or a solvent treatment method, or a surface oxidizing treatment such as a corona discharge treatment, a chromic acid treatment, a flame treatment, a hot air treatment or an ozone ultraviolet irradiation treatment, can be applied.

An antistatic function can be imparted by adding an antistatic agent as another blended material. Examples of a nonionic antistatic agent include polyoxyethylene alkyl ether, polyoxyethylene alkyl phenol, polyoxyethylene alkylamine, polyoxyethylene alkylamide, fatty acid polyethylene glycol ester, fatty acid sorbitan ester, polyoxyethylene fatty acid sorbitan ester, fatty acid glycerin ester, and alkylpolyethyleneimine. Examples of a cationic antistatic agent include alkylamine salts, alkyl quaternary ammonium salts, and alkylimidazoline derivatives. Furthermore, acrylate compounds having an ethylene oxide skeleton, can also be used. As conductive polymers, polyaniline, polypyrrole, polythiophene, poly-3,4-ethylenedioxythiophene, and derivatives thereof can be used. As metal oxides, antimony-doped tin oxide (ATO), tin-doped indium oxide (ITO), aluminum-doped zinc oxide, antimony suboxide, and the like can be used. Furthermore, in addition to these, ion-conductive-type antistatic agents mixed with metal ions such as lithium ions can also be used.

### [Hard coat layer]

As the hard coat layer of the hard coat film used in the invention, a hard coat layer having a Martens hardness of 240 to 300 N/mm², which is measured by pressing a Vickers indenter having an apex angle of 136° against the surface of the hard coat film under a load of 15 mN when a hard coat film is formed, may be acceptable, and hard coat layers formed from the cured products of various hard coating agents can be used.

Furthermore, in the case of laminating the hard coat layer via an adhesive layer on the display unit of an image display apparatus used for mobile applications it is preferable that the pencil hardness of the surface of the hard coat layer of the hard coat film be at least 3H or higher, and more preferably 4H or higher in the state where the hard coat layer is laminated on the substrate to form hard coat layer. When the pencil hardness is in this range, in the case where a glass panel and a hard coat film are laminated via an adhesive layer, the surface pencil hardness does not easily decrease, which is preferable.

The thickness of the hard coat layer used in the invention is preferably 5 to 25 µm, so that even when an adhesive protective film having a total thickness of 150 µm or less is formed, the hard coat function can be suitably realized. The thickness of the hard coat layer is more preferably 5 to 20 µm, and even more preferably 5 to 10 µm. When the thickness of the hard coat layer is in this range, the decrease of the surface pencil hardness or curing shrinkage of the hard coat layer can be easily suppressed in case of forming an adhesive protective film.

As the hard coating agent for forming such a hard coat layer, active energy ray-curable resin compositions can be suitably used, and among these, a resin composition containing a urethane acrylate (A), which is an addition reaction product of polyisocyanate (a1) and an acrylate (a2) having one hydroxyl group and two or more (meth)acryloyl groups in one molecule, and a polymer (B) having a (meth)acryloyl group, which is a reaction product of a (meth)acrylate polymer (b1) having a reactive functional group in a side chain and an α,β-unsaturated compound (b2) having a functional group capable of reacting with the reactive function group.

Examples of the polyisocyanate (a1) used in the invention include aromatic isocyanate compounds such as 2,4-tolylene diisocyanate, 2,6-tolylene diisocyanate, 1,3-xylene diisocyanate, 4,4'-diphenyl diisocyanate, 1,5-naphthalene diisocyanate, and 4,4'-diphenylmethane diisocyanate; compounds having two isocyanate groups bonded to an alicyclic hydrocarbon (hereinafter, simply referred to as alicyclic diisocyanates), such as dicyclohexylmethane diisocyanate, isophorone diisocyanate, norbornane diisocyanate, hydrogenated xylene diisocyanate, hydrogenated methylene bisphenylene diisocyanate, and 1,4-cyclohexane diisocyanate; and compounds having two isocyanate groups bonded to an aliphatic hydrocarbon (hereinafter, simply referred to as aliphatic diisocyanates), such as trimethylene diisocyanate and hexamethylene diisocyanate. These polyisocyanates may be used alone, or two or more kinds may be used in combination.

Furthermore, among these polyisocyanates (a1), aliphatic diisocyanates or alicyclic diisocyantes are preferable, and among these, isophorone diisocyanate, norbornane diisocyanate, hydrogenated xylene diisocyanate, hydrogen methylene bisphenylene diisocyanate, and hexamethylene diisocyanate are preferable. Particularly, norbornane diisocyanate is most preferable.

Examples of the acrylate having one hydroxyl group and two or more (meth)acryloyl groups in one molecule (a2) used in the invention include polyacrylates of polyvalent hydroxyl group-containing compounds, such as trimethylolpropane di(meth)acrylate, pentaerythritol tri(meth)acrylate, and dipentacrythritol penta(meth)acrylate, and adducts of these polyacrylates and ε-caprolactone, adducts of these polyacrylates and alkylene oxide, and epoxy acrylates. These acrylates (a2) can be used alone, or two or more kinds can be used in combination.

Furthermore, among these acrylates (a2), an acrylate having one hydroxyl group and three to five (meth)acryloyl groups in one molecule is preferable. Examples of such an acrylate include pentaerythritol triacrylate, and dipentaerythritol pentaacrylate, and these compounds are particularly preferable since cured films having high hardness may be obtained.

The urethane acrylate (A) used in the invention is obtained by subjecting two components such as the polyisocyanate (a1) and the acrylate (a2) to an addition reaction. The ratio of the acrylate (a2) based on one equivalent of isocyanate in the polyisocyanate (a1) is usually preferably 0.1 to 50, more preferably 0.1 to 10, and even more preferably 0.9 to 1.2, as the hydroxyl group equivalent. Furthermore, the reaction temperature for the polyisocyanate (a1) and the acrylate (a2) is preferably 30°C to 150°C, and more preferably 50°C to 100°C. Furthermore, the end point of the reaction can be confirmed by, for example, determining the loss of the peak at 2250 cm⁻¹, which shows an isocyanate group, in the infrared absorption spectrum, or by determining the isocyanate group content by the method described in JIS K 7301-1995.

Also, a catalyst can be used in the addition reaction described above, for the purpose of shortening the reaction time. Examples of the catalyst include basic catalysts (amines such as pyridine, pyrrole, triethylamine, diethylamine, dibutylamine, and ammonia; and phosphines such as tributylphosphine and triphenylphosphine), and acidic catalysts (metal alkoxides such as copper naphthenate, cobalt naphthenate, zinc naphthenate, tributoxyaluminum, tetrabutoxytrititanium, and tetrabutoxyzirconium; Lewis acids such as aluminum chloride; and tin compounds such as dibutyltin dilaurate and dibutyltin diacetate). Among these, acidic catalysts are preferable, and tin compounds are most preferable. The catalyst is usually added in an amount of 0.1 to 1 parts by mass based on 100 parts by mass of the polyisocyanate. If necessary, a solvent such as toluene, xylene, ethyl acetate, butyl acetate, methyl ethyl ketone, methyl isobutyl ketone or cyclohexanone, or a radical-polymerizable monomer which does not have a site reacting with an isocyanate, for example, the radical-polymerizable monomer described below, which has no hydroxyl group or amino group, may also be used as the solvent. These solvents and monomers may be used alone, or two or more kinds may be used in combination.

The molecular weight of the urethane acrylate (A) is preferably in the range of 500 to 1,500. When the molecular weight is in this range, a cured film having sufficiently high hardness can be obtained, and curing shrinkage can be reduced. Therefore, curling of a film having this cured film can also be reduced.

The compounding amount of the urethane acrylate (A) per a total of 100 parts by mass of the resin components in the resin composition is preferably 5 to 90 parts by mass, more preferably 10 to 70 parts by mass, and even more preferably 10 to 60 parts by mass. When the compounding amount of the urethane acrylate (A) is in this range, a cured film having sufficiently high hardness can be obtained. Also, there are no film defects, the anti-fouling properties of the surface are excellent, and curing shrinkage is reduced. Therefore, curling of a film having this curing film can also be reduced.

The reactive functional group of the (meth)acrylate polymer (b1) having the reactive functional group in a side chain used in the invention is preferably a hydroxyl group, a carboxyl group, an epoxy group, or the like. Furthermore, the functional group, which the α,β-unsaturated compound (b2) has and which is capable of reacting with such a reactive functional group, is preferably an isocyanate group, a carboxyl group, an acid halide group, a hydroxyl group, an epoxy group. The method for producing the polymer (B) having a (meth)acryloyl group, which is obtained by reacting the (meth)acrylate polymer (b1) having a reactive functional group in a side chain with the α,β-unsaturated compound (b2) having a functional group capable of reacting with the reactive functional group, is not particularly limited, and the polymer (B) can be produced by various methods. However, for example, the following production methods (1) to (3) may be used.

### Production method (1)

A method of introducing a (meth)acryloyl group by using, as the (meth)acrylatc polymer (b1), a (meth)acrylate polymer or copolymer having a hydroxyl group of a reactive functional group in the side chain, and reacting a part or all of the hydroxyl groups with (meth)acryloylethyl isocyanate, (meth)acrylic acid, (meth)acrylic acid chloride or the like as the α,β-unsaturated compound (b2).

### Production method (2)

A method of introducing a (meth)acryloyl group by using, as the (meth)acrylate polymer (b1), a (meth)acrylate polymer or copolymer having a carboxyl group of a reactive functional group in the side chain, and reacting a part or all of the carboxyl groups with an acrylate containing a hydroxyl group and a (meth)acryloyl group, or an acrylate having an epoxy group and a (meth)acryloyl group, as the α,β-unsaturated compound (b2).

### Production method (3)

A method of introducing a (meth)acryloyl group by using, as the (meth)acrylate polymer (b1), a (meth)acrylate polymer or copolymer having an epoxy group of a reactive functional group in the side chain, and reacting a part or all of the epoxy groups with a (meth)acrylic acid or an acrylate having a carboxyl group and an acryloyl group as the α,β-unsaturated compound (b2).

The method for producing the polymer (B) will be described more specifically by taking the production method (3) as an example. In the production method (3), the polymer (B) can be easily obtained by reacting a (meth)acrylate polymer or copolymer having an epoxy group with an α,β-unsaturated carboxylic acid. The (meth)acrylate polymer having an epoxy group is obtained by using, for example, a (meth)acrylate having an epoxy group, such as a glycidyl (meth)acrylate, a (meth)acrylate having an alicyclic epoxy group (for example, "CYCLOMER M100" or "CYCLOMERA200" manufactured by Daicel Chemical Industries, Ltd.), or 4-hydroxybutyl acrylate glycidyl ether as the raw material, and homopolymerizing one of these monomers.

Furthermore, the (meth)acrylate copolymer having an epoxy group can be obtained by copolymerizing two or more kinds of monomers by using an α,β-unsaturated monomer which does not have a carboxyl group, such as (meth)acrylate other than the (meth)acrylate described above, styrene, vinyl acetate or acrylonitrile as a raw material, in addition to the (meth)acrylate having an epoxy group described above. When an α,β-unsaturated monomer having a carboxyl group is used instead of the α,β-unsaturated monomer which does not have a carboxyl group, it is not preferable because a cross-linking reaction occurs at the time of the copolymerization reaction with glycidyl (meth)acrylate to induce viscosity increase or gelation.

Examples of the α,β-unsaturated carboxylic acid which reacts with the (meth)acrylate polymer or copolymer having an epoxy group include (meth)acrylic acid, and a compound having a carboxyl group and an acryloyl group (for example, "VISCOTE 2100" manufactured by Osaka Organic Chemical Industry, Ltd.).

The weight average molecular weight of the polymer (B) obtained by the production method described above is preferably 5,000 to 80,000, more preferably 5,000 to 50,000, and even more preferably 8,000 to 35,000. When the weight average molecular weight is 5,000 or larger, the effect of reducing curing shrinkage is large, and when the weight average molecular weight is 80,000 or less, the hardness is sufficiently high.

The (meth)acryloyl group equivalent of the polymer (B) is preferably 100 to 300 g/eq, and more preferably 200 to 300 g/eq. When the (meth)acryloyl group equivalent of the polymer (B) is in this range, curing shrinkage can be reduced, and the hardness can be sufficiently increased.

When the polymer (B) is produced by the production methods (1) to (3), the kind of the used monomer or polymer, the amount of the used monomer or polymer may be appropriately selected so as to satisfy the weight average molecular weight or the (meth)acryloyl group equivalent of the polymer (B) described above.

In the active energy ray curable resin composition used in the invention, a radical-polymerizable monomer (C) other than the urethane acrylate (A) and the polymer (B) may be added, in addition to the urethane acrylate (A) and the polymer (B) described above. Examples of the radical-polymerizable monomer (C) may be the following compounds.

Examples include monoacrylates such as N-vinylcaprolactam, N-vinylpyrrolidone, N-vinylcarbazole, vinylpyridine, acrylamide, N,N-dimethyl (meth)acrylamide, isobutoxymethyl (meth)acrylamide, t-octyl (meth)acrylamide, diacetone (meth)acrylamide, dimethylaminoethyl (meth)acrylate, diethylaminoethyl (meth)acrylate, 7-amino-3,7-dimethyloctyl (meth)acrylate, acryloylmorpholine, lauryl (meth)acrylate, dicyclopentadienyl (meth)acrylate, dicyclopentenyloxyethyl (meth)acrylate, dicyclopentenyl (meth)acrylate, tetrahydrofurfuryl (meth)acrylate, ethylene diethylene glycol (meth)acrylate, butoxyethyl (meth)acrylate, methyl triethylene diglycol (meth)acrylate, and phenoxyethyl (meth)acrylate; and

polyfunctional acrylates such as trimethylolpropane tri(meth)acrylate, triethylene oxide-modified trimethylolpropane tri(meth)acrylate, tripropylene oxide-modified glycerin tri(meth)acrylate, triethylene oxide-modified glycerin tri(meth)acrylate, triepichlorohydrin-modifed glycerin tri(meth)acrylate, 1,3,5-triacroylhexahydro-s-triazine, tris(acryloyloxyethyl) isocyanurate, pentaerythritol tri(meth)acrylate, pentaerythritol tetra(meth)acrylate, tetraethylene oxide-modified pentaerythritol tetra(meth)acrylate, ditrimethylolpropane tetra(meth)acrylate, diethylene oxide-modified ditrimethylolopropane tetra(meth)acrylate, dipentaerythritol penta(meth)acrylate, alkyl-modified dipentaerythritol pentaacrylate (for example, "KAYARAD D-310" manufactured by Nippon Kayaku Co., Ltd.), alkyl-modified dipentaerythritol tetraacrylate (for example, "KAYARAD D-320" manufactured by Nippon Kayaku Co., Ltd.), ε-caprolactone-modified dipentaerythritol hexaacrylate (for example, "KAYARAD DPCA-20" manufactured by Nippon Kayaku Co., Ltd.), dipentaerythritol pentamethacrylate, dipentaerythritol hexa(meth)acrylate, hexaethylene oxide-modified sorbitol hexa(meth)acrylate, and hexakis(methacryloyloxyethyl)cyclotriphosphazene (for example, "PPZ" manufactured by Kyoeisha Chemical Co., Ltd.).

Furthermore, among the radical-polymerizable monomers (C), a polyfunctional (meth)acrylate having three or more (meth)acryloyl groups in one molecule is preferable because this compound has an effect of increasing the hardness. Examples of such a polyfunctional (meth)acrylate include pentaerythritol triacrylate, pentaerythritol tetraacrylate, dipentaerythritol pentaacrylate, and dipentaerythritol hexaacrylate. These may be used alone, or two or more kinds may be used in combination.

When a monomer having an acid group such as a carboxyl group, a phosphoric acid group or a sulfonic acid group, a monomer having an amino group, or a monomer having an alkoxysilyl group or an alkoxytitanyl group is used as the radical-polymerizable monomer (C), it is preferable because the adhesiveness to the substrate can increase.

The blending amount of the radical-polymerizable monomer (C) in the resin composition is preferably 10 to 300 parts by mass based on a total of 100 parts by mass of the urethane acrylate (A) and the polymer (B). Furthermore, in order to reduce curing shrinkage and to increase the surface hardness of the cured film, the blending amount is more preferably 20 to 200 parts by mass, and even more preferably 20 to 100 parts by mass.

Furthermore, in the active energy ray-curable resin composition used in the invention, a urethane acrylate (D) other than the urethane acrylate (A) may also be added in addition to the urethane acrylate (A) and the polymer (B). An example of the urethane acrylate (D) may be a product obtained by an addition reaction of a polyol and the polyisocyanate (a1), followed by another addition reaction of the resultant with the acrylate (a2) having one hydroxyl group and two or more (meth)acryloyl groups in one molecule as described above. The blending amount of this urethane acrylate (D) in the resin composition is preferably 5 to 100 parts by mass, and more preferably 10 to 50 parts by mass, based on a total of 100 parts by mass of the urethane acrylate (A) and the polymer (B).

Furthermore, a polyester acrylate (E) may be added in addition to the urethane acrylate (A) and the polymer (B). When the composition of the resin components is in the following composition range, a cured film having sufficiently high hardness can be obtained, while there are no film defects, the anti-fouling properties of the surface are excellent, and curing shrinkage is reduced. Therefore, curling of a film having this cured film can also be decreased. For example, the blending ratio of the urethane acrylate resin (A) and the polyester acrylate resin (E) in a total of 100 parts by mass of the resin components in the resin composition is preferably in the range of (A):(E) = 10:90 to 90:10, more preferably in the range of (A):(E) = 20:80 to 80:20, and even more preferably in the range of (A):(E) = 25:75 to 75:25, on a mass basis.

In addition to the urethane acrylate resin (A) and the polyester acrylate resin (E), the polymer (B) may also be added. The blending amount of this polymer (B) in the resin composition is preferably 25 parts by mass or less, and more preferably 12 parts by mass or less, based on a total of 100 parts by mass of the urethane acrylate resin (A) and the polyester acrylate resin (E).

For the purpose of increasing the surface properties, such as the surface sliding property of the protective layer, contamination resistance, and fingerprint resistance, it is preferable to add an additive formed from a composition containing a compound having a fluorocarbon chain, a dimethylsiloxane chain, or a hydrocarbon chain having 12 or more carbon atoms, to the active energy ray-curable resin composition. The amount of the additive containing a compound having a fluorocarbon chain, a dimethylsiloxane chain, or a hydrocarbon chain having 12 or more carbon atoms, is preferably 0.05% to 5% by mass, and more preferably 0.1% to 2% by mass, based on the active energy ray-curable resin composition.

Among these, a compound containing a fluorocarbon chain has excellent surface properties such as contamination resistance, fingerprint resistance, and magic marker wipeability, and therefore, such a compound can be suitably used. Inter alia, a triisocyanate obtained by converting diisocyanate into a trimer, a perfluoropolyether compound having a hydroxyl group on at least one end, and a monomer having a hydroxyl group and a carbon-carbon double bond arc preferable.

Examples of the diisocyanate used to obtain the triisocyanate include a diisocyanate in which isocyanate groups are linked through an aliphatic linkage, such as hexamethylene diisocyanate, isophorone diisocyanate, xylene diisocyanate, hydrogenated xylene diisocyanate, or dicyclohexylmethane diisocyanate; and a diisocyanate in which isocyanate groups are linked through an aromatic linkage, such as tolylene diisocyanate, diphenylmethane diisocyanate, polymethylene polyphenyl polyisocyanate, toluidine diisocyanate, and naphthalene diisocyanate.

As the perfluoropolyether compound having a hydroxyl group on at least one end, a compound, which has a repeating unit such as -C₃F₆O-, -C₂F₄O-, or -CF₂O-, with the sum of the numbers of the repeating units being 1 to 200, and contains a hydroxyl group by having groups such as -CH₂OH, -CH₂-(OCH₂CH₂)m-OH, or -CH₂OCH₂CH(OH)CH₂OH, on at least one end, and in which when only one end has such a hydroxyl group-containing group, the other end contains a fluorine atom, can be used. The molecular weight of the perfluoropolyether compound is preferably 500 to 10,000.

The monomer having a hydroxyl group and a carbon-carbon double bond is particularly preferably a (meth)acrylate monomer having a hydroxyl group, or a vinyl monomer having a hydroxyl group. Examples of such a monomer include hydroxyethyl (meth)acrylate, aminoethyl (meth)acrylate, 2-hydroxypropyl (meth)acrylate, 2-hydroxybutyl (meth)acrylate, 2-hydroxy-3-phenoxypropyl (meth)acrylate, allyl alcohol and styrylphenol.

In regard to the adhesive protective film of the invention, since the adhesive protective film is used for small-sized electronic terminals such as mobile telephones, a film having excellent fingerprint resistance and excellent repeated wipeability of fingerprints is particularly suitably used. Thus, an isocyanurate-type perfluoropolyether urethane acrylate represented by the following structural formula is most preferable. 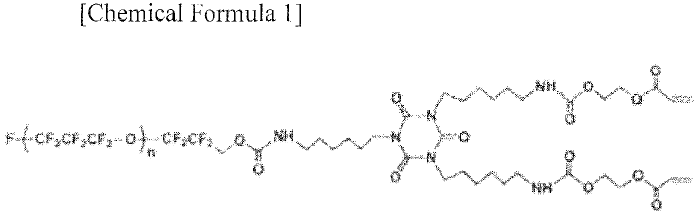 In the above formula, n represents an integer from 1 to 20.

Furthermore, a composition containing a compound having a dimethylsiloxane chain can be preferably used since the composition can provide excellent surface sliding properties. As for the compound, for example, an additive containing a compound including such a acrylate in which (meth)acryloyl group is introduced to a dimethylsiloxane skeleton through a spacer formed from an alkylene group such as an ethylene group or a polypropylene group, can be preferably used. Examples of such an acrylate include BYK-UV3500 and BYK-UV3570, manufactured by BYK Chemie GmbH; and Ebecryl 1360 manufactured by Daicel-UCB Co., Ltd.

### [Hard coat film]

The hard coat film used in the invention may include at least the film substrate described above and a hard coat layer formed from the hard coating agent described above, and have a Martens hardness of 240 to 300 N/mm², which is measured by pressing a Vickers indenter having an apex angle of 136° under a load of 15 mN. When the Martens hardness of the hard coat film is less than 240 N/mm², the hard coat layer is broken when the adhesive protective film is re-peeled, and therefore, the peeling force is increased due to the fracture stress. Furthermore, when the Martens hardness of the hard coat film is larger than 300 N/mm², because the hard coat layer is hard and brittle, cracks occur in the hard coat layer during the processing of the adhesive protective film, and the durability of the hard coat layer is markedly decreased.

The hard coat film used in the invention can be produced by applying a hard coating agent on a film substrate, and curing the hard coating agent.

Examples of the method of applying a hard coating agent on a film substrate include gravure coating, roll coating, comma coating, air knife coating, kiss coating, spray coating, pass-over coating, dip coating, spinner coating, wheeler coating, brush coating, solid coating by a silk screen process, wire bar coating, and flow coating. Furthermore, printing techniques such as offset printing and letterpress printing may also be used. Among these, gravure coating, roll coating, comma coating, air knife coating, kiss coating, wire bar coating, and flow coating are preferable because a coating film having a more uniform thickness can be obtained.

The hard coating agent may be appropriately cured in accordance with the hard coating agent used, but in the case of using the active energy ray-curable resin composition as the hard coating agent, the resin composition may be cured by active energy rays such as light, an electron beam or radiation. Specific examples of the energy source or curing apparatus include ultraviolet radiation generated from light sources such as a germicidal lamp, a fluorescent lamp for ultraviolet radiation, a carbon arc, a xenon lamp, a high pressure mercury lamp for duplication, a medium pressure or high pressure mercury lamp, an ultra-high pressure mercury lamp, an electrodeless lamp, a metal halide lamp, and a natural lamp, and an electron beam generated by a scanning-type or a curtain-type electron beam accelerator,.

Among these, ultraviolet radiation is particularly preferable, and from the viewpoint of efficiency of polymerization, it is preferable to irradiate the radiation under an inert gas atmosphere such as nitrogen gas. Also, if necessary, heat, as an energy source, may be used in combination, and a heat treatment may be carried out after curing with active energy rays.

When ultraviolet radiation is used as a means for irradiating active energy rays, examples of the light generating source include a low pressure mercury lamp, a high pressure mercury lamp, an ultra-high pressure mercury lamp, a metal halide lamp, an electrodeless lamp (fusion lamp), a chemical lamp, a black light lamp, a mercury-xenon lamp, a short arc lamp, a helium-cadmium laser, an argon laser, sunlight, and an LED. Furthermore, when a cured film is formed after applying the active energy ray-curable resin composition used in the invention on a film substrate, it is preferable to use a xenon flash lamp which irradiates in a flash-like manner, because the effect of heat on the film substrate can be decreased.

### [Adhesive layer]

As the adhesive layer used in the invention, an adhesive layer, in which a 180° peel adhesive force is 4 to 15 N/25 mm measured when, after an adhesive tape formed by providing an adhesive layer having a thickness of 10 µm on a PET base having a thickness of 100 µm is pressure-bonded to a glass plate under an environment of a temperature of 23°C and a relative humidity of 50% RH, by performing pressure bonding using a 2-kg roller in one round trip and is left to stand for 240 hours under an environment of 60°C and 90% humidity, the adhesive tape is peeled at a peeling rate of 300 mm/min, may be used. According to the invention, when the 180° peel adhesive force of the adhesive layer is adjusted to the adhesive force described above, floating or peeling at the film edges does not occur even though the adhesive protective film is used for a long time, and the film can be suitably re-peeled in the case of re-peeling the film. Also, when the thickness of the adhesive layer is adjusted to 5 to 20 µm, even when stress concentrations occur at the surface of the adhesive protective film, a high elastic modulus of the adhesive protective film as a whole can be maintained. Therefore, it is considered that a decrease in hardness of the hard coat layer provided on the surface of the adhesive film can be suppressed.

A known acrylic, rubber-based or silicone-based adhesive resin can be used for the adhesive used in the adhesive layer used in the invention. Among these, an acrylic copolymer containing, as a repeating unit, a (meth)acrylate monomer having an alkyl group having 2 to 14 carbon atoms as a principal monomer component is preferable from the viewpoints of light resistance and heat resistance.

Specific examples of the (meth)acrylate monomer having 2 to 14 carbon atoms include ethyl acrylate, n-propyl acrylate, isopropyl acrylate, n-butyl acrylate, sec-butyl acrylate, t-butyl acrylate, n-hexyl acrylate, cyclohexyl acrylate, n-octyl acrylate, isooctyl acrylate, 2-ethylhexyl acrylate, isononyl acrylate, isodecyl acrylate, lauryl acrylate, methyl methacrylate, ethyl methacrylate, n-propyl methacrylate, isopropyl methacrylate, n-butyl methacrylate, sec-butyl methacrylate, t-butyl methacrylate, n-hexyl methacrylate, cyclohexyl methacrylate, n-octyl methacrylate, isooctyl methacrylate, 2-ethylhexyl methacrylate, isononyl methacrylate, isodecyl methacrylate, and lauryl methacrylate.

Among these, an alkyl methacrylate having an alkyl side chain having 4 to 9 carbon atoms, or an alkyl acrylate having an alkyl side chain having 4 to 9 carbon atoms is preferable, and an alkyl acrylate having an alkyl side chain having 4 to 9 carbon atoms is more preferable. Among these, n-butyl acrylate, isooctyl acrylate, 2-ethylhexyl acrylate, isononyl acrylate, and ethyl acrylate are particularly preferable. When an alkyl (meth)acrylate having an alkyl side chain having carbon atoms in the range described above is used, a suitable adhesive force can be easily secured.

The content of the (meth)acrylate having 2 to 14 carbon atoms among the monomers constituting the acrylic copolymer used in the adhesive layer of the invention is preferably 90% to 99% by mass, and more preferably 90% to 96% by mass. When the content of the (meth)acrylate having 2 to 14 carbon atoms in the carboxyl group-containing (meth)acrylic acid ester copolymer is adjusted to the range described above, a suitable adhesive force can be easily secured.

It is preferable that the acrylic copolymer further contain, as a monomer component, a (meth)acrylic acid ester monomer or another vinyl-based monomer, both of which have a polar group such as a hydroxyl group, a carboxyl group, or an amino group in a side chain.

Examples of the monomer having a hydroxyl group include hydroxyl group-containing (meth)acrylates such as 2-hydroxyethyl (meth)acrylate, 4-hydroxybutyl (meth)acrylate, 6-hydroxyhexyl (meth)acrylate, hydroxypropyl (meth)acrylate, caprolactone-modified (meth)acrylate, polyethylene glycol mono(meth)acrylate, and polypropylene glycol (meth)acrylate. Among these, it is preferable to use 2-hydroxyethyl (meth)acrylate, 4-hydroxybutyl (meth)acrylate or 6-hydroxyhexyl (meth)acrylate as a copolymerization component.

Examples of the monomer having a carboxyl group include acrylic acid, methacrylic acid, itaconic acid, maleic acid, crotonic acid, (meth)acrylic acid dimer, and ethylene oxide-modified succinic acrylate. Among these, it is preferable to use acrylic acid as a copolymerization component.

Examples of the monomer having a nitrogen atom include amide group-containing vinyl monomers such as N-vinyl-2-pyrrolidone, N-vinylcaprolactam, acryloylmorpholine, acrylamide, N,N-dimethylacrylamide, and 2-(perhydrophthalimido-N-yl)ethyl acrylate. Among these, it is preferable to use N-vinyl-2-pyrrolidone, N-vinylcaprolactam, or acryloylmorpholine as a copolymerization component.

Examples of the other vinyl-based monomer having a polar group include vinyl acetate, acrylonitrile, maleic anhydride, and itaconic anhydride.

The content of the monomer having a polar group is preferably 0.1% to 20% by mass, more preferably 1% to 13% by mass, and even more preferably 1.5% to 8% by mass, of the monomer components constituting the acrylic copolymer. When the monomer having a polar group is contained in the range described above, the cohesive force, retentive force or adhesiveness of the adhesive can be easily regulated to suitable ranges.

The weight average molecular weight Mw of the acrylic copolymer used in the adhesive layer is preferably 400,000 to 1,400,000, and more preferably 600,000 to 1,200,000. When the weight average molecular weight Mw of the acrylic copolymer is in the range described above, the adhesive force can be easily regulated to a specific range, and when the adhesive layer is used in an adhesive protective film, the load on the film surface can be easily and appropriately mitigated.

The weight average molecular weight Mw of the acrylic copolymer can be measured by gel permeation chromatography (GPC). More specifically, the weight average molecular weight can be determined by measuring the molecular weight under the following GPC measurement conditions using an "SC8020" manufactured by Tosoh Corp. as a GPC analyzer, and converting the measurement value relative to polystyrene standards.

### (GPC measurement conditions)

- Sample concentration: 0.5% by weight (tetrahydrofuran solution)
- Sample injection amount: 100 µL
- Eluent: Tetrahydrofuran (THF)
- Flow rate: 1.0 mL/min
- Column temperature (measurement temperature): 40°C
- Column: "TSKgel GMHHR-H" manufactured by Tosoh Corp.
- Detector: Differential refractometry

In order to further impart a cohesive force to the adhesive layer, it is preferable to add a cross-linking agent to the adhesive. Examples of the cross-linking agent include an isocyanate-based cross-linking agent, an epoxy-based cross-linking agent, and a chelate-based cross-linking agent. It is preferable to adjust the amount of the cross-linking agent to obtain a gel fraction of 25% to 80% in the adhesive layer. A more preferable gel fraction is 40% to 75%. Among these, a gel fraction of 50% to 70% is most preferable. When the gel fraction is less than 25%, when the adhesive protective film is adhered to a panel, the surface pencil hardness is decreased. On the other hand, if the gel fraction exceeds 80%, adhesiveness is decreased. The gel fraction is determined by immersing a cured adhesive layer in toluene for 24 hours, and measuring the mass after drying an insoluble matter left behind, and is expressed as a percentage based on the original mass.

In order to further improve the adhesive force of the adhesive layer, a tackifying resin may be added. Examples of the tackifying resin that is added to the adhesive layer of the adhesive tape of the invention include rosin-based resins such as rosin or an esterification product of rosin; a terpene resin such as diterpene polymer or an α-pincne-phenol copolymer; aliphatic (C5-based) or aromatic (C9) petroleum resin; as well as a styrene resin, a phenolic resin, and a xylene resin. In order to bring the b* value of the adhesive layer after being left to stand for 14 days at 100°C, to 6 or less, it is preferable to add a hydrogenated rosin or an esterification product of disproportionate rosin, which has fewer unsaturated double bonds, or an aliphatic or aromatic petroleum resin, to the adhesive layer.

In order to achieve a balance between adhesiveness and yellowing resistance, it is preferable to use a disproportionate rosin ester, a polymerized rosin ester, and a petroleum resin in combination.

In regard to the amount of the tackifying resin to be added, when the adhesive is an acrylic resin, it is preferable to add 10 to 60 parts by mass of the tackifying resin based on 100 parts by mass of the acrylic copolymer. In the case of emphasizing adhesiveness, it is most preferable to add 20 to 50 parts by mass of the tackifying resin. Furthermore, when the adhesive is a rubber-based resin, it is preferable to add 80 to 150 parts by mass of the tackifying resin based on 100 parts by mass of the rubber-based resin. Generally, when the adhesive is a silicone-based resin, a tackifying resin is not added.

In addition to those described above, known conventional additives can also be added to the adhesive. For example, in order to enhance adhesiveness to glass, a silane coupling agent can be added in the range of 0.001 to 0.005. In addition to that, a plasticizer, a softening agent, a filler, a pigment, a flame retardant, can be added.

The adhesive layer can be formed on a film substrate by a method generally used for coating of an adhesive sheet. A composition of the adhesive layer is directly applied on a substrate film and dried, or is first applied on a separator (release sheet), dried, and then bonded to a substrate film.

The storage modulus (20°C) of the adhesive layer is preferably 2.0×10⁵ Pa or more, and more preferably 2.5×10⁵ Pa or more. When the storage modulus is 2.0×10⁵ Pa or more, the adhesive does not become excessively soft, and when provided with the adhesive layer, an adhesive protective film having high surface hardness can be realized. The adhesive force can also be easily adjusted to a specific range.

### [Adhesive protective film]

The adhesive protective film of the invention is constructed by providing an adhesive layer on the hard coat film, and has a total thickness of 60 to 150 µm, and preferably 80 to 120 µm.

When an adhesive protective film of the invention is constructed by combining constituent members having their property values adjusted to specific ranges, the adhesive protective film in which the surface is not easily damaged, processability is excellent, floating or peeling does not easily occur, and re-peelability is excellent, can be obtained. Furthermore, when the thickness of the constituent member is adjusted to a specific range, contradictory characteristics can be combined such that a very thin film having a thickness of 150 µm or less can prevent scratching or deformation at the time of stress concentration. Thereby, an excellent surface hardness that could not be obtained in conventional adhesive protective films, can be realized even though a special hard coat layer or film substrate having very high hardness or rigidity is not provided.

The adhesive protective film of the invention can be suitably re-peeled even after being used for a long time period. Furthermore, the adhesive protective film can realize high surface hardness, and can realize a hardness of preferably 2H or higher, and more preferably 3H or higher, while being bonded to a glass plate. The adhesive protective film can be suitably used as an adhesive protective film for thin-type glass panels for portable electronic terminals, or as an adhesive protective film for various displays. Furthermore, when the object of bonding is a material causing fragmentation, such as glass, the adhesive protective film is useful as a scattering preventing film which prevents scattering when the object of bonding is cracked.

### [Screen panel]

The screen panel of the invention is formed from a laminate of a glass plate and the adhesive protective film of the invention. Since the screen panel is not easily damaged at the surface layer, the screen panel can be usefully used in the image display area of various displays. Among these, a screen panel which is a laminate of a glass plate and an adhesive protective film having a surface hardness of 3H or higher while being bonded to the glass plate, particularly reduce damage of the glass plate, and is therefore very useful for various display applications having the screen panel on the surface of the image display area.

The glass plate is preferably a toughened glass plate. Examples of a method of toughening a glass plate include physical toughening methods and chemical toughening methods. Particularly, the chemical toughening methods include an ion exchange method and an air quench toughening method. Examples of the material for the glass plate include float glass, alkali glass, alkali-free glass, and toughened glass.

### [Portable electronic terminal]

The portable electronic terminal of the invention has a configuration, in which a screen panel of a laminate with the adhesive protective film of the invention is fixed in a casing having an LCD module with a gap between the screen panel and the LCD module surface. Since this configuration has a cavity underneath the screen panel, the screen panel at the surface of the image display area may be bent when an impact or the like is added on the surface of the screen panel. When bending, stress is concentrated at the depressed areas and the screen panel is easily damaged. However, even in this case, when the adhesive protective film of the invention is used, damage can be suitably prevented. Therefore, the adhesive protective film and the screen panel of the invention can be particularly suitably used in a portable electronic terminal having the configuration.

### EXAMPLES

Hereinafter, the invention will be more specifically described based on Examples and Comparative Examples.

### (Production Example 1)

### <Synthesis of urethane acrylate (UA1)>

In a flask equipped with a stirrer, a gas inlet tube, a cooling tube and a thermometer, 254 parts by mass of butyl acetate, 222 parts by mass of isophorone diisocyanate (hereinafter, referred to as "IPDI"), 0.5 parts by mass of p-methoxyphenol, and 0.5 parts by mass of dibutyltin diacetate are introduced, and the mixture was heated to 70°C. Subsequently, 795 parts by mass of a mixture of pentaerythritol triacrylate (hereinafter, "PE3A")/pentaerythritol tetraacrylate (hereinafter, "PE4A") (mixture at a mass ratio of 75/25) was added dropwise to the flask over one hour. After completion of dropwise addition, the mixture was allowed to react for 3 hours at 70°C, and was further allowed to react until the peak at 2250 cm⁻¹ in the infrared absorption spectrum, which represents an isocyanate group, disappeared. Thus, a mixture of urethane acrylate (UA1)/PE4A (a mixture at a mass ratio of 80/20, a butyl acetate solution having 80% by mass of a non-volatile fraction) was obtained. The molecular weight of urethane acrylate (UA1) was 818.

### <Synthesis of polymer (X)>

In a flask equipped with a stirrer, a gas inlet tube, a cooling tube and a thermometer, 250 parts by mass of glycidyl methacrylate (hereinafter, referred to as "GMA"), 1.3 parts by mass of laurylmercaptan, 1000 parts by mass of methyl isobutyl ketone (hereinafter, referred to as "MIBK"), and 7.5 parts by mass of 2.2'-azobisisobutyronitrile (hereinafter, referred to as "AIBN") were introduced, and while the mixture was stirred under a nitrogen gas stream, the mixture was heated to 90°C over one hour and was allowed to react for one hour at 90°C. Subsequently, while the reaction mixture was stirred at 90°C, a mixed liquid containing 750 parts by mass of GMA, 3.7 parts by mass of laurylmercaptan, and 22.5 parts by mass of AIBN was added dropwise to the flask over 2 hours. Subsequently, the resulting mixture was allowed to react for 3 hours at 100°C. Thereafter, 10 parts by mass of AIBN was introduced to the flask, and the resulting mixture was allowed to react for one hour at 100°C, was heated to near 120°C, and was allowed to react for 2 hours. The reaction mixture was cooled to 60°C, and the nitrogen inlet tube was replaced with an air inlet tube. 507 parts by mass of acrylic acid (hereinafter, referred to as "AA"), 2 parts by mass of p-methoxyphenol, and 5.4 parts by mass of triphenylphosphine were added to the flask and mixed. Subsequently, the reaction liquid was bubbled with air, the reaction liquid was heated to 110°C and was allowed to react for 8 hours. Subsequently, 1.4 parts by mass of p-methoxyphenol was added to the reaction liquid, and the reaction mixture was cooled to room temperature. MIBK was added to adjust the non-volatile fraction to 50% by mass, and thus a polymer (X) (an MIBK solution containing 50% by mass of a non-volatile fraction) was obtained. The weight average molecular weight of the polymer (X) thus obtained was 31,000 (measured by GPC and calculated relative to polystyrene standards), and the (meth)acryloyl group equivalent was 300 g/eq.

An active energy ray-curable resin composition (resin composition 1), which was a main agent for the following hard coating agent, was prepared using the urethane acrylate (UA1) and the polymer (X) obtained as described above.

3.1 parts by mass of ethyl acetate, 40.0 parts by mass of a butyl acetate solution (non-volatile fraction 80%) of a urethane acrylate (UA1)/PE4A mixture (a mixture at a mass ratio of 80/20), 64.0 parts by mass of an MIBK solution (non-volatile fraction 50%) of the polymer (X), 16.0 parts by mass of dipentaerythritol hexaacrylate (hereinafter, referred to as "DPHA"), 1.63 parts by mass of photoinitiator, 1-hydroxycyclohexyl phenyl ketone (hereinafter, referred to as "HCPK"), and 1.16 parts by mass of photoinitiator, diphenyl-2,4,6-trimethylbenzoyl phosphine oxide (hereinafter, referred to as "TPO") were uniformly mixed, and thus a resin composition 1 (non-volatile fraction 65%) was prepared.

### (Production Example 2)

### <Synthesis of urethane acrylate (UA2)>

In a flask equipped with a stirrer, a gas inlet tube, a cooling tube and a thermometer, 161.8 parts by mass of butyl acetate, 222 parts by mass of isophorone diisocyanate (hereinafter, referred to as "IPDI"), 0.5 parts by mass of p-methoxyphenol, and 0.5 parts by mass of dibutyltin diacetate were introduced, and the mixture was heated to 70°C. Subsequently, 461.3 parts by mass of a butyl acetate solution of bis(acryloxyethyl)hydroxyethyl isocyanurate containing 80% of a non-volatile fraction was added dropwise to the flask over one hour. After completion of the dropwise addition, the mixture was allowed to react for 3 hours at 70°C. Subsequently, 434 parts by mass of a PE3A/PE4A mixture (a mixture at a mass ratio of 75/25) was added dropwise to the flask over one hour. After completion of the dropwise addition, the reaction mixture was allowed to react for 3 hours at 70°C, and was further allowed to react until the peak at 2250 cm⁻¹ in the infrared absorption spectrum, which represents an isocyanate group, disappeared. Thus, a mixture of urethane acrylate (UA2)/PE4A (a mixture at a mass ratio of 87/13, a butyl acetate solution having 80% by mass of a non-volatile fraction) was obtained. The molecular weight of urethane acrylate (UA2) was 889.

An active energy ray-curable resin composition (resin composition 2), which was a main agent for the following hard coating agent, was prepared using the urethane acrylate (UA2).

23.1 parts by mass of ethyl acetate, 50.0 parts by mass of a butyl acetate solution (non-volatile fraction 80%) of a urethane acrylate (UA2)/PE4A mixture (a mixture at a mass ratio of 87/13), 40.0 parts by mass of dipentaerythritol hexaacrylate (hereinafter, referred to as "DPHA"), 3.2 parts by mass of photoinitiator, 1-hydroxcyclohexyl phenyl ketone (hereinafter, referred to as "HCPK"), and 0.8 parts by mass of photoinitiator, diphenyl-2,4,6-trimethylbenzoyl phosphine oxide (hereinafter, referred to as "TPO") were uniformly mixed, and thus a resin composition 2 (non-volatile fraction 65%) was prepared.

### (Hard coating agent 1)

100 parts by mass of an MIBK solution (non-volatile fraction 50% by mass) of the resin composition 1 prepared in the Production 1 of the main agent, and 2 parts by mass of a reactive fluorine anti-fouling agent containing isocyanurate-type perfluoropolyether urethane acrylate (n=8) represented by the above formula (OPTOOL DAC; manufactured by Daikin Industries, Ltd., non-volatile fraction 20% by mass) were uniformly mixed. Subsequently, the mixture was diluted with ethyl acetate such that the non-volatile fraction reached 40% by mass, and thus a hard coating agent (1) was obtained.

### (Hard coating agent 2)

100 parts by mass of an MIBK solution (non-volatile fraction 50% by mass) of the resin composition 1 prepared in the Production 2 of the main agent, and 1 part by mass of silicone hexaacrylate ("EBECRYL 1360" manufactured by Daicel-UCB Co., Ltd.; hereinafter, referred to as "SiA") were uniformly mixed. Subsequently, the mixture was diluted with ethyl acetate such that the non-volatile fraction reached 40% by mass, and thus a hard coating agent (2) was obtained.

### (Adhesive layer 1)

100 parts by weight of an adhesive manufactured by Soken Chemical & Engineering Co., Ltd., SK-909A, was mixed with 0.7 parts by weight of an isocyanate-based cross-linking agent (CORONATE L-45, manufactured by Nippon Polyurethane Industry Co., Ltd., solids content 45%), and the mixture was stirred for 15 minutes. Thus, an adhesive was prepared. Subsequently, the prepared adhesive was applied on a peelable liner in which a peelable layer of a silicone compound was formed on one surface of a polyethylene terephthalate film having a thickness of 75 µm, and the adhesive was dried at 90°C for 90 seconds. Thus, an adhesive layer (1) having a thickness after drying of 10 µm was formed.

### (Adhesive layer 2)

100 parts by weight of an adhesive manufactured by Soken Chemical & Engineering Co., Ltd., FP-7, was mixed with 1.0 part by weight of an isocyanate-based cross-linking agent (CORONATE L-45, manufactured by Nippon Polyurethane Industry Co., Ltd., solids content 45%), and the mixture was stirred for 15 minutes. Thus, an adhesive was prepared. Subsequently, the prepared adhesive was applied on a peelable liner in which a peelable layer of a silicone compound was formed on one surface of a polyethylene terephthalate film having a thickness of 75 µm, and the adhesive was dried at 90°C for 90 seconds. Thus, an adhesive layer (2) having a thickness after drying of 10 µm was formed.

### (Adhesive layer 3)

100 parts by weight of an adhesive manufactured by DIC Corp., SPS1030B, was mixed with 1.0 part by weight of an isocyanate-based cross-linking agent (CORONATE L-45, manufactured by Nippon Polyurethane Industry Co., Ltd., solids content 45%), and the mixture was stirred for 15 minutes. Thus, an adhesive was prepared. Subsequently, the prepared adhesive was applied on a peelable liner in which a peelable layer of a silicone compound was formed on one surface of a polyethylene terephthalate film having a thickness of 75 µm, and the adhesive was dried at 90°C for 90 seconds. Thus, an adhesive layer (3) having a thickness after drying of 10 µm was formed.

### (Adhesive layer 4)

In a reaction vessel equipped with a stirrer for preparing acrylic copolymer, a cold flow cooler, a thermometer, a dropping funnel and a nitrogen gas inlet port, 93.8 parts by weight of n-butyl acrylate, 5 parts by weight of benzyl acrylate, 1 part by weight of 4-hydroxybutyl acrylate, 0.2 parts by weight of acrylic acid, and 0.2 parts of 2,2'-azobisisobutyronitrile as a polymerization initiator were dissolved in 70 parts by weight of ethyl acetate. The solution was purged with nitrogen, was heated to 60°C, and then was allowed to react for 3 hours. Subsequently, while 20 parts by weight of ethyl acetate was added dropwise to the reaction mixture over 50 minutes, 0.2 parts by weight of a polymerization initiator ("PERHEXYL PV" manufactured by NOF Corp.) was added to the mixture. The resulting mixture was heated to 80°C and was allowed to react for 5 hours. After completion of the reaction, the reaction mixture was diluted with ethyl acetate, and thus an acrylic copolymer (P1) having a resin solids content of 15% and a weight average molecular weight of 1,800,000 was obtained.

100 parts by weight of the obtained acrylic copolymer (P1) was mixed with 1.0 part by weight of an isocyanate-based cross-linking agent (CORONATE L-45, manufactured by Nippon Polyurethane Industry Co., Ltd., solids content 45%), and the mixture was stirred for 15 minutes. Thus, an adhesive was prepared. Subsequently, the prepared adhesive was applied on a peelable liner in which a peelable layer of a silicone compound was formed on one surface of a polyethylene terephthalate film having a thickness of 75 µm, and the adhesive was dried at 90°C for 90 seconds. Thus, an adhesive layer (4) having a thickness after drying of 10 µm was formed.

### (Adhesive layer 5)

### <Acrylic copolymer (P2)>

In a reaction vessel equipped with a stirrer for preparing acrylic copolymer, a cold flow cooler, a thermometer, a dropping funnel and a nitrogen gas inlet port, 91.5 parts by weight of n-butyl acrylate, 0.5 parts by weight of 2-hydroxyethyl acrylate, 8.0 parts by weight of acrylic acid, and 0.2 parts of 2,2'-azobisisobutyronitrile as a polymerization initiator were dissolved in 100 parts by weight of ethyl acetate. The solution was purged with nitrogen and was polymerized at 80°C for 8 hours. Thus, an acrylic copolymer (P2) having a weight average molecular weight of 800,000 was obtained.

### <Acrylic copolymer (P3)>

In a reaction vessel equipped with a stirrer for preparing acrylic copolymer, a cold flow cooler, a thermometer, a dropping funnel and a nitrogen gas inlet port, 95.0 parts by weight of methyl methacrylate, 5.0 parts by weight of dimethylaminoethyl methacrylate, and 1.0 part by weight of 2,2'-azobisisobutyronitrile as a polymerization initiator were dissolved in 100 parts by weight of ethyl acetate. The solution was purged with nitrogen and was polymerized at 80°C for 8 hours. Thus, a methacrylic copolymer (P3) having a weight average molecular weight of 20,000 was obtained.

100 parts by weight of the acrylic copolymer (P2) was mixed with 20 parts by weight of the acrylic copolymer (P3), and the mixture was diluted with ethyl acetate. 100 parts by weight of an obtained adhesive, with a resin solid content of 30%, was mixed with 0.7 parts by weight of an isocyanate-based cross-linking agent (CORONATE L-45, manufactured by Nippon Polyurethane Industry Co., Ltd., solids content 45%), and the mixture was stirred for 15 minutes. Thus, an adhesive was prepared. Subsequently, the prepared adhesive was applied on a peelable liner in which a peelable layer of a silicone compound was formed on one surface of a polyethylene terephthalate film having a thickness of 75 µm, and the adhesive was dried at 90°C for 90 seconds. Thus, an adhesive layer (5) having a thickness after drying of 10 µm was formed.

### (Adhesive layer 6)

### <Acrylic copolymer (P4)>

In a reaction vessel equipped with a stirrer for preparing acrylic copolymer, a cold flow cooler, a thermometer, a dropping funnel and a nitrogen gas inlet port, 87.0 parts by weight of n-butyl acrylate, 10.0 parts by weight of cyclohexyl acrylate, 3.0 parts by weight of 2-hydroxyethyl acrylate, and 0.2 parts of 2,2'-azobisisobutyronitrile as a polymerization initiator were dissolved in 100 parts by weight of ethyl acetate. The solution was purged with nitrogen and was polymerized at 80°C for 8 hours. Thus, an acrylic copolymer (P4) having a weight average molecular weight of 900,000 was obtained.

### <Acrylic copolymer (P5)>

In a reaction vessel equipped with a stirrer for preparing acrylic copolymer, a cold flow cooler, a thermometer, a dropping funnel and a nitrogen gas inlet port, 95.0 parts by weight of cyclohexylmethyl methacrylate, 5.0 parts by weight of dimethylaminoethyl methacrylate, and 1.0 part of 2,2'-azobisisobutyronitrile as a polymerization initiator were dissolved in 100 parts by weight of ethyl acetate. The solution was purged with nitrogen and was polymerized at 80°C for 8 hours. Thus, a methacrylic copolymer (P5) having a weight average molecular weight of 20,000 was obtained.

100 parts by weight of the acrylic copolymer (P4) was mixed with 2.5 parts by weight of the acrylic copolymer (P5), and the mixture was diluted with ethyl acetate. 100 parts by weight of an obtained adhesive, with a resin solid content of 30%, was mixed with 0.1 part by weight of an isocyanate-based cross-linking agent (D-160N, manufactured by Mitsui Chemical Polyurethanes, Inc., solids content 75%), and the mixture was stirred for 15 minutes. Thus, an adhesive was prepared. Subsequently, the prepared adhesive was applied on a peelable liner in which a peelable layer of a silicone compound was formed on one surface of a polyethylene terephthalate film having a thickness of 75 µm, and the adhesive was dried at 90°C for 90 seconds. Thus, an adhesive layer (6) having a thickness after drying of 10 µm was formed.

### (Example 1)

The hard coating agent (1) prepared as described above was applied on one surface of a polyethylene terephthalate film (COSMOSHINE A4300, manufactured by Toyobo Co., Ltd.) having a thickness of 100 µm, and the hard coating agent was dried at 60°C for 90 seconds. The hard coating agent was irradiated under air atmosphere with ultraviolet radiation at an irradiation dose of 0.5 J/cm² using an ultraviolet irradiating apparatus ("F450" manufactured by Fusion UV Systems Japan K.K., lamp: 120 W/cm, H valve), and thus a hard coat layer having a thickness of 10 µm was formed. Subsequently, the non-hard coating treated surface was surface-treated using a corona treatment apparatus to obtain a surface tension of 55 dynes/cm, and thus a hard coat film was obtained. The adhesive layer (1) was bonded to the corona-treated surface of this hard coat film under a pressure of 4 kg/cm, and then the assembly was cured for 2 days at 40°C. Thus, an adhesive protective film having a thickness of 120 µm was obtained.

### (Example 2)

The adhesive layer (2) was bonded to the corona-treated surface of the hard coat film (1) under a pressure of 4 kg/cm, and then the assembly was cured for 2 days at 40°C. Thus, an adhesive protective film having a thickness of 120 µm was obtained.

### (Example 3)

An adhesive protective film having a thickness of 92 µm was obtained in the same manner as in Example (1), except that the thickness of the hard coat layer of the hard coat film (1) was changed to 7 µm, and the thickness of the PET film was changed to 75 µm.

### (Reference Example)

An adhesive protective film having a thickness of 122 µm was obtained in the same manner as in Example (1), except that the hard coating agent (2) was used, and the thickness of the hard coat layer was changed to 12 µm.

### (Example 5)

An adhesive protective film having a thickness of 120 µm was obtained by bonding the adhesive layer (5) to the corona-treated surface of the hard coat film (1) under a pressure of 4 kg/cm, and then curing the assembly for 2 days at 40°C.

### (Example 6)

An adhesive protective film having a thickness of 120 µm was obtained by bonding the adhesive layer (6) on the corona-treated surface of the hard coat film (1) under a pressure of 4 kg/cm, and then curing the assembly for 2 days at 40°C.

### (Comparative Example 1)

The hard coating agent (2) prepared as described above was applied on one surface of a polyethylene terephthalate film (COSMOSHINE A4300 manufactured by Toyobo Co., Ltd.) having a thickness of 75 µm, and the hard coating agent was dried at 60°C for 90 seconds. The hard coating agent was irradiated under air atmosphere with ultraviolet radiation at an irradiation dose of 0.5 J/cm² using an ultraviolet irradiating apparatus ("F450" manufactured by Fusion UV Systems Japan K.K., lamp: 120 W/cm, H valve), and thus a hard coat layer having a thickness of 8 µm was formed. Subsequently, the non-hard coating treated surface was surface-treated using a corona treatment apparatus to obtain a surface tension of 55 dynes/cm, and thus a hard coat film was obtained. The adhesive layer (3) was bonded to the corona-treated surface of this hard coat film under a pressure of 4 kg/cm, and then the assembly was cured for 2 days at 40°C. Thus, an adhesive protective film having a thickness of 93 µm was obtained.

### (Comparative Example 2)

An adhesive protective film having a thickness of 120 µm was obtained by bonding the adhesive layer (4) to the corona-treated surface of the hard coat film (1) under a pressure of 4 kg/cm, and then curing the assembly for 2 days at 40°C.

### (Comparative Example 3)

An adhesive protective film having a thickness of 64 µm was obtained in the same manner as in Comparative Example (1), except that the hard coating agent (1) was used, the thickness of the hard coating layer was changed to 4 µm, the thickness of the PET film was changed to 50 µm, and the adhesive layer (1) was used.

### (Comparative Example 4)

An adhesive protective film having a thickness of 113 µm was obtained in the same manner as in Comparative Example (1), except that the hard coating agent (1) was used, the thickness of the hard coating layer was changed to 3 µm, the thickness of the PET film was changed to 100 µm, and the adhesive layer (1) was used.

### (Comparative Example 5)

An adhesive protective film having a thickness of 125 µm was obtained in the same manner as in Comparative Example (1), except that the hard coating agent (1) was used, the thickness of the hard coating layer was changed to 15 µm, the thickness of the PET film was changed to 100 µm, and the adhesive layer (1) was used.

### (Comparative Example 6)

An adhesive protective film having a thickness of 125 µm was obtained in the same manner as in Comparative Example (1), except that the hard coating agent (2) was used, the thickness of the hard coating layer was changed to 15 µm, the thickness of the PET film was changed to 100 µm, and the adhesive layer (1) was used.

### (Comparative Example 7)

An adhesive protective film having a thickness of 110 µm was obtained by bonding the adhesive layer (1) on the corona-treated surface of COSMOSHINE A4300 having a thickness of 100 µm under a pressure of 4 kg/cm, and then curing the assembly for 2 days at 40°C.

The adhesive protective films obtained in the Examples and Comparative Examples were subjected to the following evaluations. The obtained results are shown in Tables 1 and 2.

### (Martens hardness)

The adhesive protective films obtained in the Examples and Comparative Examples were bonded to glass plates, and the Martens hardness of the surface of the hard coat layer was measured using a FISCHERSCOPE H100CXY with a Vickers indenter having an apex angle of 136°, at a maximum pressing depth of 1 µm, a maximum load of 15 mN, and a loading time of 15 seconds.

### (Measurement of pencil hardness of surface of adhesive protective film)

The adhesive protective films obtained in the Examples and Comparative Examples were bonded to glass plates, and the surface pencil hardness was measured according to the definitions of JIS K5600-5-4 (1999 edition), using a pencil scratch testing machine (manual) for coating films manufactured by Imoto Machinery Co., Ltd.

### (180° peel adhesive force)

An adhesive protective film cut to a width of 25 mm was pressure-bonded to a glass plate under an environment of a temperature of 23°C and a relative humidity of 50% RH, by performing pressure bonding using a 2-kg roller in one round trip, and was left to stand for 240 hours under an environment of 60°C and 90% humidity. Then, the adhesive protective film was peeled in the 180° direction at a peeling rate of 300 mm/min. and the 180° peel adhesive force was measured.

### (Re-peelability)

An adhesive protective film cut to a width of 25 mm was pressure-bonded to a glass plate under an environment of a temperature of 23°C and a relative humidity of 50% RH, by performing pressure bonding using a 2-kg roller in one round trip, and was left to stand for 240 hours under an environment of 60°C and 90% humidity. Then, the adhesive protective film was peeled with the hand. The evaluation was made according to the following criteria.
O: The peeling resistance was small, and the film was peeled without any residual adhesive.
X: The peeling resistance was large, or there was residual adhesive left behind

### (Hard coat cracking)

An adhesive protective film was cut from the hard coat surface with a cutter knife (NT CUTTER PRO A manufactured by NT Inc.), and the cut surface was observed for the cracking of the hard coat layer by magnifying with a microscope (magnification 100 times).

### (Fingerprint wipeability)

The adhesive protective films obtained in the Examples and Comparative Examples were bonded to glass plates, and the index finger was pressed on the surface of the hard coat layer for 5 seconds with a load of about 1 kg. The number of wipes made until the fingerprint was completely wiped out with KIMWIPES (S-200, manufactured by Nippon Paper Crecia Co., Ltd.) was counted, and thus the fingerprint wipeability was determined according to the following determination criteria.
⊚ 1 to 10 times
O: 10 to 20 times
Δ: 20 to 30 times
X: 30 times or more

**[Table 1]**

| | Unit | Example 1 | Example 2 | Example 3 | Reference Example | Example 5 | Example 6 |
|---|---|---|---|---|---|---|---|
| Martens hardness | N/mm² | 298 | 298 | 250 | 288 | 298 | 298 |
| 180° peel adhesive force | N/25mm | 9 | 9 | 8 | 8.5 | 8 | 8 |
| Pencil hardness (with adhesive layer) | - | 2H | 2H | 2H | 2H | 2H | 2H |
| Re-peelability | - | ○ | ○ | ○ | ○ | ○ | ○ |
| Edge peeling | - | ○ | ○ | ○ | ○ | ○ | ○ |
| Hard coat cracking | - | Absent | Absent | Absent | Absent | Absent | Absent |
| Fingerprint wipeability | - | ⊚ | ⊚ | ⊚ | ○ | ⊚ | ⊚ |

**[Table 2]**

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Martens hardness | N/mm² | 288 | 298 | 218 | 230 | 308 | 302 | - |
| 180° peel adhesive force | N/25mm | 15 | 14 | 22 | 20 | 9 | 9 | 10 |
| Pencil hardness (with adhesive layer) | - | 2H | 2H | <H | <H | 2H | 2H | <H |
| Re-peelability | - | X | O | X | X | O | O | O |
| Edge peeling | - | O | X | O | O | O | O | O |
| Hard coat cracking | - | Absent | Absent | Absent | Absent | Present | Present | - |
| Fingerprint wipeability | - | O | ⊚ | ⊚ | ⊚ | ⊚ | ⊚ | X |

As is obvious from Table 1 shown above, the adhesive protective films of Examples 1 to 6 of the invention, each composed of a hard coat film having a specific Martens hardness and an adhesive layer having a specific adhesive force, have suitable surface hardness and adhesive force and can realize excellent re-peelability. On the other hand, the adhesive protective film of Comparative Example 1 having a high adhesive force exhibited poor re-peelability, and the adhesive protective film of Comparative Example 2 having a low adhesive force exhibited poor adhesiveness to the object to be bonded. The adhesive protective films of Comparative Example 3 and Comparative Example 4 did not satisfy the configuration of the invention, even though the same hard coating agent and adhesive as those used in Example 1 were used in these Comparative Examples, and therefore, these adhesive protective films exhibited poor re-peelability. Furthermore, Comparative Example 5 and Comparative Example 6 did not satisfy the constitution of the invention, even though the same hard coating agent and adhesive as those used in Example 1 were used in Comparative Example 5, and the same hard coating agent and adhesive as those used in Example 4 were used in Comparative Example 6, and therefore, cracks were generated in the hard coat layers. Also, the adhesive protective film of Comparative Example 7 did not have a hard coat layer, and accordingly had low surface hardness.

## Claims

1. An adhesive protective film comprising:
a hard coat film having a film substrate and a hard coat layer provided on at least one side of the surface layers of the film substrate and an adhesive layer provided on the hard coat film, wherein
the hard coat film is a hard coat film having a Martens hardness of 240 to 300 N/mm², as measured by pressing a Vickers indenter having an apex angle of 136° on the surface of the hard coat layer under a load of 15 mN, and
the hard coat layer is formed from a cured film of an active energy ray-curable resin composition containing
a urethane acrylate (A) which is an addition reaction product between a polyisocyanate (a1) and an acrylate (a2) having one hydroxyl group and two or more (meth)acryloyl groups in one molecule;
a polymer (B) having a (meth)acryloyl group produced by reacting a (meth)acrylate polymer (b1) having a reactive functional group in a side chain with an α,β-unsaturated compound (b2) having a functional group capable of reacting with the reactive functional group; and
the following isocyanurate type perfluoropolyether urethane acrylate: 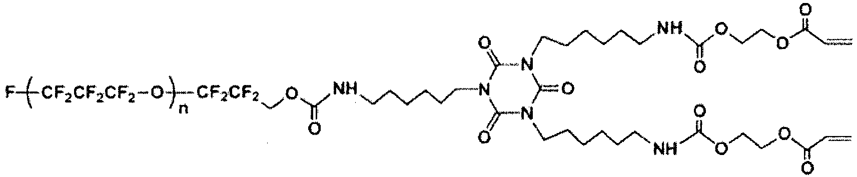 wherein n represents an integer from 1 to 20, and
the adhesive layer is an adhesive layer having a 180° peel adhesive force of 4 to 15 N/25 mm, as obtained when an adhesive tape formed by providing an adhesive layer having a thickness of 10 µm on a PET base having a thickness of 100 µm, is pressure bonded to a glass plate under an environment of a temperature of 23°C and a relative humidity of 50% RH, by performing pressure bonding using a 2-kg roller in one round trip, is left to stand for 240 hours under an environment of 60°C and 90% humidity, and is peeled at a peeling rate of 300 mm/min.

2. The adhesive protective film according to Claim 1, wherein polymer having a (meth)acryloyl group (B) is a polymer obtained by reacting an α,β-unsaturated carboxylic acid with a part or all of the epoxy groups in a polymer or copolymer of (meth)acrylate having an epoxy group as the reactive functional group in a side chain.

3. The adhesive protective film according to any one of claims 1-2, wherein the thickness of the hard coat layer is 5 to 25 µm, the thickness of the adhesive layer is 5 to 20 µm, and the total thickness is 200 µm or less.

4. A screen panel comprising a laminate of the adhesive protective film according to any one of claims 1-3 and a glass plate having a thickness of 0.1 to 1 mm.

5. A portable electronic terminal comprising the screen panel according to Claim 4 fixed in a casing having an LCD module, with a gap disposed between the screen panel and the LCD module surface.

## Patentansprüche

1. Klebende Schutzfolie umfassend:
eine Hartbeschichtungsfolie, welche ein Foliensubstrat und eine Hartbeschichtungsschicht, welche auf wenigstens einer Seite der Oberflächenschichten des Filmsubstrats angeordnet ist, und eine Klebschicht, welche auf der Hartbeschichtungsfolie angeordnet ist, hat, wobei
die Hartbeschichtungsfolie eine Hartbeschichtungsfolie ist, welche eine Martens-Härte von 240 bis 300 N/mm², gemessen durch Eindrücken eines Vickers-Eindringkörpers, welcher einen Öffnungswinkel von 136° hat, auf der Oberfläche der Hartbeschichtungsschicht unter einer Last von 15 mN, hat, und
die Hartbeschichtungsschicht aus einer ausgehärteten Folie einer durch aktive Energiestrahlen härtbare Harzzusammensetzung gebildet wird, beinhaltend
ein Urethanacrylat (A), welches ein Produkt einer Additionsreaktion zwischen einem Polyisocyanat (a1) und einem Acrylat (a2) mit einer Hydroxylgruppe und zwei oder mehr (Meth)acryloylgruppen in einem Molekül ist;
ein Polymer (B), welches eine (Meth)acryloylgruppe erzeugt durch Reaktion eines (Meth)acrylatpolymers (b1), welches eine reaktive funktionelle Gruppe in einer Seitenkette hat, mit einer α,β-ungesättigten Verbindung (b2), welche eine funktionelle Gruppe, welche fähig ist mit der reaktiven funktionellen Gruppe zu reagieren, hat; und
das folgende Isocyanurattyp-Perfluorpolyetherurethanacrylat: 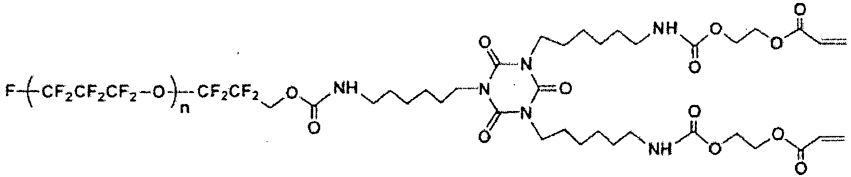 wobei n eine ganze Zahl von 1 bis 20 ist, und
die Klebschicht eine Klebschicht ist, welche eine 180° Schälklebkraft von 4 bis 15 N/25 mm hat, wie man erhält, wenn ein Klebeband, welches durch Bereitstellen einer Klebschicht, einer Dicke von 10 µm, auf einer PET-Basis, einer Dicke von 100 µm gebildet wurde, unter Druck an eine Glasplatte geklebt wird, in einer Umgebung mit einer Temperatur von 23°C und einer relativen Luftfeuchtigkeit von 50% RH, durch Ausführen von Druckverklebung unter Verwendung einer 2-kg-Walze mit einmaligen hin und her Walzen, für 240 Stunden in einer Umgebung von 60°C und 90% Feuchtigkeit stehen gelassen wird, und bei einer Abziehgeschwindigkeit von 300 mm/min abgezogen wird.

2. Klebende Schutzfolie gemäß Anspruch 1, wobei das Polymer, welches eine (Meth)acryloylgruppe hat, (B) ein Polymer ist, welches durch Reaktion einer α,β-ungesättigten Carbonsäure mit einem Teil der oder allen Epoxidgruppen in einem Polymer oder Copolymer eines (Meth)acrylats, welches eine Epoxidgruppe als eine reaktive funktionelle Gruppe in einer Seitenkette hat, erhalten wurde.

3. Klebende Schutzfolie gemäß einem der Ansprüche 1 bis 2, wobei
die Dicke der Hartbeschichtungsschicht 5 bis 25 µm beträgt, die Dicke der Haftschicht 5 bis 20 µm beträgt und die gesamte Dicke 200 µm oder weniger beträgt.

4. Bildschirm umfassend ein Laminat aus der klebenden Schutzfolie gemäß einem der Ansprüche 1 bis 3 und einer Glasplatte, welche eine Dicke von 0,1 bis 1 mm hat.

5. Tragbares elektronisches Endgerät umfassend den Bildschirm gemäß Anspruch 4, welcher in einem Gehäuse, welches ein LCD-Modul, angeordnet mit einer Lücke zwischen dem Bildschirm und der LCD-Modul-Oberfläche, hat, befestigt ist.

## Revendications

1. Film protecteur adhésif comprenant :
un film de revêtement dur ayant un film substrat et une couche de revêtement dur disposée sur au moins un côté des couches de surface du film substrat et une couche adhésive disposée sur le film de revêtement dur, dans lequel
le film de revêtement dur est un film de revêtement dur ayant une dureté de Martens de 240 à 300 N/mm², mesurée en appuyant un pénétrateur Vickers ayant un angle de sommet de 136° sur la surface de la couche de revêtement dur sous une charge de 15 mN, et
la couche de revêtement dur est formée à partir d'un film durci d'une composition de résine durcissable par rayons d'énergie active contenant
un acrylate d'uréthane (A) qui est un produit de réaction d'addition entre un polyisocyanate (a1) et un acrylate (a2) ayant un groupe hydroxyle et deux groupes méthacryloyles ou plus dans une molécule ;
un polymère (B) ayant un groupe méthacryloyle produit en faisant réagir un polymère de méthacrylate (b1) ayant un groupe fonctionnel réactif dans une chaîne latérale avec un composé α, β-insaturé (b2) ayant un groupe fonctionnel pouvant réagir avec le groupe fonctionnel réactif ; et
l'acrylate de perfluoropolyéther uréthane de type isocyanurate suivant : 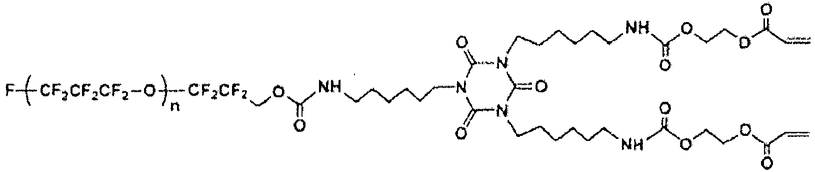 où n représente un nombre entier de 1 à 20, et
la couche adhésive est une couche adhésive ayant une force adhésive de pelage à 180° de 4 à 15 N/25 mm, obtenue lorsqu'une bande adhésive formée en disposant une couche adhésive ayant une épaisseur de 10 µm sur une base en PET ayant une épaisseur de 100 µm, est liée par pression à une plaque en verre dans un environnement d'une température de 23 °C et une humidité relative de 50 % HR, en réalisant une liaison par pression à l'aide d'un rouleau de 2 kg en un aller-retour, est laissée reposer pendant 240 heures dans un environnement de 60 °C et une humidité de 90 %, et est pelée à une vitesse de pelage de 300 mm/min.

2. Film protecteur adhésif selon la revendication 1, dans lequel un polymère ayant un groupe méthacryloyle (B) est un polymère obtenu en faisant réagir un acide carboxylique α,β-insaturé avec tout ou partie des groupes époxy dans un polymère ou copolymère de méthacrylate ayant un groupe époxy en tant que groupe fonctionnel réactif dans une chaîne latérale.

3. Film protecteur adhésif selon l'une quelconque des revendications 1 à 2, dans lequel l'épaisseur de la couche de revêtement dur est de 5 à 25 µm, l'épaisseur de la couche adhésive est de 5 à 20 µm, et l'épaisseur totale est de 200 µm ou moins.

4. Panneau-écran comprenant un stratifié du film protecteur adhésif selon l'une quelconque des revendications 1 à 3 et une plaque en verre ayant une épaisseur de 0,1 à 1 mm.

5. Terminal électronique portable comprenant le panneau-écran selon la revendication 4 fixé dans un boîtier ayant un module LCD, avec un écartement disposé entre le panneau-écran et la surface de module LCD.
